# EUROPEAN PATENT APPLICATION

(11) **EP 4 456 597 A1**
(43) Date of publication of application: **30.10.2024**
(21) Application number: 23746059.7
(22) Date of filing: 16.01.2023
(51) Int. Cl.: H04W 24/04

(54) **COMMUNICATION METHODS AND COMMUNICATION APPARATUSES**

(30) Priority: 26.01.2022 CN 202210091679
(71) Applicant: Huawei Technologies Co., Ltd., Shenzhen, Guangdong 518129 (CN)
(72) Inventor: ZHOU, Kai, Shenzhen, Guangdong 518129 (CN); ZHU, Jintao, Shenzhen, Guangdong 518129 (CN)
(74) Representative: Maiwald GmbH
(86) International application number: PCT/CN2023/072336
(87) International publication number: WO 2023/143177

(57) **Abstract**

This application provides a communication method and a communication apparatus. In the method, an apparatus in an industrial communication system provides, for a network exposure function network element in a wireless communication system, information used for wireless communication scheduling of the apparatus. In other words, the apparatus in the industrial communication system can output the information to the wireless communication system, so that the wireless communication system can schedule the apparatus in the industrial communication system more properly based on the information, to reduce impact of a network status of the wireless communication system on a service.

## Description

This application claims priority to Chinese Patent Application No. 202210091679.4, filed with the China National Intellectual Property Administration on January 26, 2022 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

With development of communication technologies, a wireless communication system represented by a 5th generation (5th generation, 5G) communication system gradually becomes a connection medium of an industrial communication system. Industrial devices on an industrial field may access a wireless communication network, and the industrial devices may communicate with each other by using the wireless communication system. However, compared with a network status of a wired connection medium, a network status of the wireless communication system is constantly changing. The constantly changing network status affects a service.

### SUMMARY

This application provides a method for controlling a service, to help reduce impact of a network status change of a wireless communication system on a service.

According to a first aspect, a communication method is provided. The method is applied to an industrial communication system, and the industrial communication system includes a first apparatus and a second apparatus.

The method may be performed by the second apparatus, or may be performed by a module or a unit used in the second apparatus. For ease of uniform descriptions below, the method is performed by the second apparatus.

The method includes: The second apparatus obtains first information from the first apparatus, where the first information is used for wireless communication scheduling of the first apparatus; and the second apparatus sends the first information to a network exposure function network element in the wireless communication system.

In the foregoing technical solution, the second apparatus in the industrial communication system may obtain, from the first apparatus, the information used for wireless communication scheduling of the first apparatus, and send the information to the network exposure function network element in the wireless communication system. In other words, the apparatus in the industrial communication system can output the information to the wireless communication system, so that the wireless communication system can schedule the apparatus in the industrial communication system based on the information. This helps the wireless communication system schedule the apparatus in the industrial communication system more properly, to reduce impact of a network status of the wireless communication system on a service.

With reference to the first aspect, in a possible implementation, the first information includes at least one of the following information: first request information, service status information of the first apparatus, and configuration information of the industrial communication system, and the first request information is used to request the wireless communication system to adjust scheduling information of the first apparatus.

With reference to any one of the first aspect or the implementations of the first aspect, in another possible implementation, the method further includes: The second apparatus obtains second information from the network exposure function network element, where the second information includes network status information of the wireless communication network; and the second apparatus sends the second information to the first apparatus.

The second information may be used to control a first service.

In the foregoing technical solution, the first apparatus in the industrial communication system may obtain the network status information of the wireless communication system, and then control a device in the industrial communication system based on the obtained network status information, to implement service control. When controlling the device in the industrial communication system, the first apparatus considers a factor of the network status of the wireless communication system, which helps reduce impact of a network status change of the wireless communication system on a service.

With reference to any one of the first aspect or the implementations of the first aspect, in another possible implementation, the network status information includes at least one of the following information: wireless network status information of the first apparatus, air interface capacity information of the wireless communication system, and a network connection relationship of the wireless communication system.

With reference to any one of the first aspect or the implementations of the first aspect, in another possible implementation, the second apparatus is a function instance established on a first application function network element.

With reference to any one of the first aspect or the implementations of the first aspect, in another possible implementation, the first apparatus includes a control device and/or a controlled device. The control device may be a programmable logic controller (programmable logic controller, PLC), a distributed control system (also referred to as a distributed control system) (distributed control system, DCS), a fieldbus control system (fieldbus control system, FCS), or the like. The controlled device may be an input/output (input/output, I/O) device, an industrial terminal device, or the like.

According to a second aspect, a communication method is provided. The method is applied to an industrial communication system, and the industrial communication system includes a first apparatus.

The method may be performed by the first apparatus, or may be performed by a module or a unit used in the first apparatus. For ease of uniform descriptions below, the method is performed by the first apparatus.

The method includes: The first apparatus determines first information, where the first information is used for wireless communication scheduling of the first apparatus; and the first apparatus sends the first information to a network exposure function network element in the wireless communication system.

In the foregoing technical solution, the apparatus in the industrial communication system can output, to the wireless communication system, the information used for the wireless communication scheduling of the first apparatus, so that the wireless communication system can schedule the apparatus in the industrial communication system based on the information. This helps the wireless communication system schedule the apparatus in the industrial communication system more properly, to reduce impact of a network status of the wireless communication system on a service.

With reference to the second aspect, in a possible implementation, the first information includes at least one of the following information: first request information, service status information of the first apparatus, and configuration information of the industrial communication system, and the first request information is used to request a wireless communication system to adjust scheduling information of the first apparatus.

With reference to any one of the second aspect or the implementations of the second aspect, in another possible implementation, that the first apparatus sends the first information to a network exposure function network element in the wireless communication system includes: The first apparatus sends the first information to the network exposure function network element via a second apparatus, where the second apparatus supports communication with the network exposure function network element.

With reference to any one of the second aspect or the implementations of the second aspect, in another possible implementation, the method further includes: The first apparatus obtains second information from the network exposure function network element, where the second information includes network status information of the wireless communication system; and the first apparatus controls a first service based on the second information.

In the foregoing technical solution, the first apparatus in the industrial communication system may obtain the network status information of the wireless communication system, and then control a device in the industrial communication system based on the obtained network status information, to implement service control. When controlling the device in the industrial communication system, the first apparatus considers a factor of the network status of the wireless communication system, which helps reduce impact of a network status change of the wireless communication system on a service.

With reference to any one of the second aspect or the implementations of the second aspect, in another possible implementation, that the first apparatus obtains second information from the network exposure function network element includes: The first apparatus obtains the second information from the network exposure function network element via the second apparatus, where the second apparatus supports communication with the network exposure function network element.

With reference to any one of the second aspect or the implementations of the second aspect, in another possible implementation, the network status information includes at least one of the following information: wireless network status information of the first apparatus, air interface capacity information of the wireless communication system, and a network connection relationship of the wireless communication system.

With reference to any one of the second aspect or the implementations of the second aspect, in another possible implementation, that the first apparatus controls a first service based on the second information includes: The first apparatus performs service degradation on the first service based on the second information when a fault occurs in the industrial communication system and/or a fault occurs in the wireless communication system.

Compared with direct shutdown upon receiving of a fault signal, in this case, impact of the fault on the first service can be reduced.

With reference to any one of the second aspect or the implementations of the second aspect, in another possible implementation, that the first apparatus controls a first service based on the second information includes: The first apparatus determines preset waiting duration based on the second information when the fault occurs in the industrial communication system and/or the fault occurs in the wireless communication network; and the first apparatus terminates the first service if the fault in the industrial communication system and/or the fault in the wireless communication system are/is not rectified within the preset duration.

Compared with direct shutdown upon receiving of a fault signal, in this case, impact of the fault on the first service can be reduced.

With reference to any one of the second aspect or the implementations of the second aspect, in another possible implementation, the second apparatus is a function instance established on a first application function network element.

With reference to any one of the second aspect or the implementations of the second aspect, in another possible implementation, the first apparatus includes at least one of a control device, a controlled device, or an application function (application function, AF) network element. The control device may be a PLC, a DCS, an FCS, or the like. The controlled device may be an I/O device, an industrial terminal device, or the like.

According to a third aspect, a communication method is provided. The method is applied to an industrial communication system, and the industrial communication system includes a first apparatus and a second apparatus.

The method may be performed by the first apparatus and the second apparatus, or may be performed by modules or units used in the first apparatus and the second apparatus. For ease of uniform descriptions below, the method is performed by the first apparatus and the second apparatus.

The method includes: The first apparatus determines first information, where the first information is used for wireless communication scheduling of the first apparatus; the first apparatus sends the first information to the second apparatus; and the second apparatus sends the first information to a network exposure function network element in the wireless communication system.

In the foregoing technical solution, the second apparatus in the industrial communication system may obtain, from the first apparatus, the information used for wireless communication scheduling of the first apparatus, and send the information to the network exposure function network element in the wireless communication system. In other words, the apparatus in the industrial communication system can output the information to the wireless communication system, so that the wireless communication system can schedule the apparatus in the industrial communication system based on the information. This helps the wireless communication system schedule the apparatus in the industrial communication system more properly, to reduce impact of a network status of the wireless communication system on a service.

With reference to the third aspect, in a possible implementation, the first information includes at least one of the following information: first request information, service status information of the first apparatus, and configuration information of the industrial communication system, and the first request information is used to request a wireless communication system to adjust scheduling information of the first apparatus.

With reference to any one of the third aspect or the implementations of the third aspect, in another possible implementation, the method further includes: The second apparatus obtains second information from the network exposure function network element, where the second information includes network status information of the wireless communication system; the second apparatus sends the second information to the first apparatus; and the first apparatus controls a first service based on the second information.

In the foregoing technical solution, the first apparatus in the industrial communication system may obtain the network status information of the wireless communication system, and then control a device in the industrial communication system based on the obtained network status information, to implement service control. When controlling the device in the industrial communication system, the first apparatus considers a factor of the network status of the wireless communication system, which helps reduce impact of a network status change of the wireless communication system on a service.

With reference to any one of the third aspect or the implementations of the third aspect, in another possible implementation, the network status information includes at least one of the following information: wireless network status information of the first apparatus, air interface capacity information of the wireless communication system, and a network connection relationship of the wireless communication system.

With reference to any one of the third aspect or the implementations of the third aspect, in another possible implementation, that the first apparatus controls a first service based on the second information includes: The first apparatus performs service degradation on the first service based on the second information when a fault occurs in the industrial communication system and/or a fault occurs in the wireless communication system.

Compared with direct shutdown upon receiving of a fault signal, in this case, impact of the fault on the first service can be reduced.

With reference to any one of the third aspect or the implementations of the third aspect, in another possible implementation, that the first apparatus controls a first service based on the second information includes: The first apparatus determines preset waiting duration based on the second information when the fault occurs in the industrial communication system and/or the fault occurs in the wireless communication network; and the first apparatus terminates the first service if the fault in the industrial communication system and/or the fault in the wireless communication system are/is not rectified within the preset duration.

Compared with direct shutdown upon receiving of a fault signal, in this case, impact of the fault on the first service can be reduced.

With reference to any one of the third aspect or the implementations of the third aspect, in another possible implementation, the second apparatus is a function instance established on a first application function network element.

With reference to any one of the third aspect or the implementations of the third aspect, in another possible implementation, the first apparatus includes at least one of a control device, a controlled device, or an AF. The control device may be a PLC, a DCS, an FCS, or the like. The controlled device may be an I/O device, an industrial terminal device, or the like.

According to a fourth aspect, a communication method is provided. The method is applied to an industrial communication system, and the industrial communication system includes a first apparatus and a second apparatus.

The method may be performed by the second apparatus, or may be performed by a module or a unit used in the second apparatus. For ease of uniform descriptions below, the method is performed by the second apparatus.

The method includes: The second apparatus obtains second information from a network exposure function network element in a wireless communication system, where the second information includes network status information of the wireless communication network; and the second apparatus sends the second information to the first apparatus.

The second information may be used to control a first service. In the foregoing technical solution, the first apparatus in the industrial communication system may obtain the network status information of the wireless communication system, and then control a device in the industrial communication system based on the obtained network status information, to implement service control. When controlling the device in the industrial communication system, the first apparatus considers a factor of the network status of the wireless communication system, which helps reduce impact of a network status change of the wireless communication system on a service.

With reference to the fourth aspect, in a possible implementation, the network status information includes at least one of the following information: wireless network status information of the first apparatus, air interface capacity information of the wireless communication system, and a network connection relationship of the wireless communication system.

With reference to any one of the fourth aspect or the implementations of the fourth aspect, in another possible implementation, the method further includes: The second apparatus obtains first information from the first apparatus, where the first information is used for wireless communication scheduling of the first apparatus; and the second apparatus sends the first information to a network exposure function network element in the wireless communication system.

In the foregoing technical solution, the second apparatus in the industrial communication system may obtain, from the first apparatus, the information used for wireless communication scheduling of the first apparatus, and send the information to the network exposure function network element in the wireless communication system. In other words, the apparatus in the industrial communication system can output the information to the wireless communication system, so that the wireless communication system can schedule the apparatus in the industrial communication system based on the information. This helps the wireless communication system schedule the apparatus in the industrial communication system more properly, to reduce impact of a network status of the wireless communication system on a service.

With reference to any one of the fourth aspect or the implementations of the fourth aspect, in another possible implementation, the first information includes at least one of the following information: first request information, service status information of the first apparatus, and configuration information of the industrial communication system, and the first request information is used to request a wireless communication system to adjust scheduling information of the first apparatus.

With reference to any one of the fourth aspect or the implementations of the fourth aspect, in another possible implementation, the second apparatus is a function instance established on a first application function network element.

With reference to any one of the fourth aspect or the implementations of the fourth aspect, in another possible implementation, the first apparatus includes a control device and/or a controlled device. The control device may be a PLC, a DCS, an FCS, or the like. The controlled device may be an I/O device, an industrial terminal device, or the like.

According to a fifth aspect, a communication method is provided. The method is applied to an industrial communication system, and the industrial communication system includes a first apparatus.

The method may be performed by the first apparatus, or may be performed by a module or a unit used in the first apparatus. For ease of uniform descriptions below, the method is performed by the first apparatus.

The method includes: The first apparatus obtains second information from a network exposure function network element in a wireless communication system, where the second information includes network status information of the wireless communication system; and the first apparatus controls a first service based on the second information.

In the foregoing technical solution, the first apparatus in the industrial communication system may obtain the network status information of the wireless communication system, and then control a device in the industrial communication system based on the obtained network status information, to implement service control. When controlling the device in the industrial communication system, the first apparatus considers a factor of the network status of the wireless communication system, which helps reduce impact of a network status change of the wireless communication system on a service.

With reference to the fifth aspect, in a possible implementation, that the first apparatus obtains second information from the network exposure function network element includes: The first apparatus obtains the second information from the network exposure function network element via a second apparatus, where the second apparatus supports communication with the network exposure function network element.

With reference to any one of the fifth aspect or the implementations of the fifth aspect, in another possible implementation, the network status information includes at least one of the following information: wireless network status information of the first apparatus, air interface capacity information of the wireless communication system, and a network connection relationship of the wireless communication system.

With reference to any one of the fifth aspect or the implementations of the fifth aspect, in another possible implementation, that the first apparatus controls a first service based on the second information includes: The first apparatus performs service degradation on the first service based on the second information when a fault occurs in the industrial communication system and/or a fault occurs in the wireless communication system.

Compared with direct shutdown upon receiving of a fault signal, in this case, impact of the fault on the first service can be reduced.

With reference to any one of the fifth aspect or the implementations of the fifth aspect, in another possible implementation, that the first apparatus controls a first service based on the second information includes: The first apparatus determines preset waiting duration based on the second information when the fault occurs in the industrial communication system and/or the fault occurs in the wireless communication network; and the first apparatus terminates the first service if the fault in the industrial communication system and/or the fault in the wireless communication system are/is not rectified within the preset duration.

Compared with direct shutdown upon receiving of a fault signal, in this case, impact of the fault on the first service can be reduced.

With reference to any one of the fifth aspect or the implementations of the fifth aspect, in another possible implementation, the method further includes: The first apparatus determines first information, where the first information is used for wireless communication scheduling of the first apparatus; the first apparatus sends the first information to a network exposure function network element in the wireless communication system.

In the foregoing technical solution, the apparatus in the industrial communication system can output, to the wireless communication system, the information used for the wireless communication scheduling of the first apparatus, so that the wireless communication system can schedule the apparatus in the industrial communication system based on the information. This helps the wireless communication system schedule the apparatus in the industrial communication system more properly, to reduce impact of a network status of the wireless communication system on a service.

With reference to the fifth aspect, in a possible implementation, that the first apparatus sends the first information to a network exposure function network element in the wireless communication system includes: The first apparatus sends the first information to the network exposure function network element via a second apparatus, where the second apparatus supports communication with the network exposure function network element.

With reference to any one of the fifth aspect or the implementations of the fifth aspect, in another possible implementation, the first information includes at least one of the following information: first request information, service status information of the first apparatus, and configuration information of the industrial communication system, and the first request information is used to request a wireless communication system to adjust scheduling information of the first apparatus.

With reference to any one of the fifth aspect or the implementations of the fifth aspect, in another possible implementation, the second apparatus is a function instance established on a first application function network element.

With reference to any one of the fifth aspect or the implementations of the fifth aspect, in another possible implementation, the first apparatus includes at least one of a control device, a controlled device, or an AF. The control device may be a PLC, a DCS, an FCS, or the like. The controlled device may be an I/O device, an industrial terminal device, or the like.

According to a sixth aspect, a communication method is provided. The method is applied to an industrial communication system, and the industrial communication system includes a first apparatus and a second apparatus.

The method may be performed by the first apparatus and the second apparatus, or may be performed by modules or units used in the first apparatus and the second apparatus. For ease of uniform descriptions below, the method is performed by the first apparatus and the second apparatus.

The method includes: The second apparatus obtains second information from a network exposure function network element in a wireless communication system, where the second information includes network status information of the wireless communication system; the second apparatus sends the second information to the first apparatus; and the first apparatus controls a first service based on the second information.

In the foregoing technical solution, the first apparatus in the industrial communication system may obtain the network status information of the wireless communication system, and then control a device in the industrial communication system based on the obtained network status information, to implement service control. When controlling the device in the industrial communication system, the first apparatus considers a factor of the network status of the wireless communication system, which helps reduce impact of a network status change of the wireless communication system on a service.

With reference to the sixth aspect, in a possible implementation, the network status information includes at least one of the following information: wireless network status information of the first apparatus, air interface capacity information of the wireless communication system, and a network connection relationship of the wireless communication system.

With reference to any one of the sixth aspect or the implementations of the sixth aspect, in another possible implementation, that the first apparatus controls a first service based on the second information includes: The first apparatus performs service degradation on the first service based on the second information when a fault occurs in the industrial communication system and/or a fault occurs in the wireless communication system.

Compared with direct shutdown upon receiving of a fault signal, in this case, impact of the fault on the first service can be reduced.

With reference to any one of the sixth aspect or the implementations of the sixth aspect, in another possible implementation, that the first apparatus controls a first service based on the second information includes: The first apparatus determines preset waiting duration based on the second information when the fault occurs in the industrial communication system and/or the fault occurs in the wireless communication network; and the first apparatus terminates the first service if the fault in the industrial communication system and/or the fault in the wireless communication system are/is not rectified within the preset duration.

Compared with direct shutdown upon receiving of a fault signal, in this case, impact of the fault on the first service can be reduced.

With reference to any one of the sixth aspect or the implementations of the sixth aspect, in another possible implementation, the method further includes: The first apparatus determines first information, where the first information is used for wireless communication scheduling of the first apparatus; the first apparatus sends the first information to the second apparatus; and the second apparatus sends the first information to the network exposure function network element.

In the foregoing technical solution, the second apparatus in the industrial communication system may obtain, from the first apparatus, the information used for wireless communication scheduling of the first apparatus, and send the information to the network exposure function network element in the wireless communication system. In other words, the apparatus in the industrial communication system can output the information to the wireless communication system, so that the wireless communication system can schedule the apparatus in the industrial communication system based on the information. This helps the wireless communication system schedule the apparatus in the industrial communication system more properly, to reduce impact of a network status of the wireless communication system on a service.

With reference to any one of the sixth aspect or the implementations of the sixth aspect, in another possible implementation, the first information includes at least one of the following information: first request information, service status information of the first apparatus, and configuration information of the industrial communication system, and the first request information is used to request a wireless communication system to adjust scheduling information of the first apparatus.

With reference to any one of the sixth aspect or the implementations of the sixth aspect, in another possible implementation, the second apparatus is a function instance established on a first application function network element.

With reference to any one of the sixth aspect or the implementations of the sixth aspect, in another possible implementation, the first apparatus includes at least one of a control device, a controlled device, or an AF. The control device may be a PLC, a DCS, an FCS, or the like. The controlled device may be an I/O device, an industrial terminal device, or the like.

According to a seventh aspect, a communication method is provided. The method may be performed by a network exposure function network element, or may be performed by a module or a unit used in a network exposure function network element. For ease of uniform descriptions below, the method is performed by the network exposure function network element.

The method includes: The network exposure function network element receives first information from the first apparatus, where the first information is used for wireless communication scheduling of the first apparatus; and/or the network exposure function network element sends second information to the first apparatus, where the second information includes network status information of a wireless communication system.

The first apparatus belongs to an industrial communication system, and the network exposure function network element belongs to the wireless communication system.

In the foregoing technical solution, the apparatus in the industrial communication system can output, to the wireless communication system, the information used for the wireless communication scheduling of the first apparatus, so that the wireless communication system can schedule the apparatus in the industrial communication system based on the information. This helps the wireless communication system schedule the apparatus in the industrial communication system more properly. The industrial communication system may further obtain the network status information of the wireless communication system, so that the industrial communication system can control a device in the industrial communication system based on the obtained network status information, to implement service control. This helps reduce impact of a network status of the wireless communication system on a service.

With reference to the seventh aspect, in a possible implementation, the network exposure function network element receives the first information from the first apparatus via the second device, and/or sends the second information to the first apparatus via the second apparatus.

With reference to any one of the seventh aspect or the implementations of the seventh aspect, in another possible implementation, the first information includes at least one of the following information: first request information, service status information of the first apparatus, and configuration information of the industrial communication system, and the first request information is used to request a wireless communication system to adjust scheduling information of the first apparatus.

With reference to any one of the seventh aspect or the implementations of the seventh aspect, in another possible implementation, the network status information includes at least one of the following information: wireless network status information of the first apparatus, air interface capacity information of the wireless communication system, and a network connection relationship of the wireless communication system.

With reference to any one of the seventh aspect or the implementations of the seventh aspect, in another possible implementation, the second apparatus is a function instance established on a first application function network element.

With reference to any one of the seventh aspect or the implementations of the seventh aspect, in another possible implementation, the first apparatus includes a control device and/or a controlled device. The control device may be a PLC, a DCS, an FCS, or the like. The controlled device may be an I/O device, an industrial terminal device, or the like.

According to an eighth aspect, a communication apparatus is provided. The apparatus is configured to perform the method provided in any one of the foregoing aspects or the implementations of the foregoing aspects. Specifically, the apparatus may include units and/or modules configured to perform the method provided in any one of the foregoing aspects or the implementations of the foregoing aspects, for example a processing unit and/or a communication unit.

In an implementation, the apparatus is a first apparatus, a second apparatus, or a network exposure function network element. When the apparatus is the first apparatus, the second apparatus, or the network exposure function network element, the communication unit may be a transceiver or an input/output interface; and the processing unit may be at least one processor. Optionally, the transceiver is a transceiver circuit. Optionally, the input/output interface is an input/output circuit.

In another implementation, the apparatus is a chip, a chip system, or a circuit used in the first apparatus, the second apparatus, or the network exposure function network element. When the apparatus is the chip, the chip system, or the circuit used in the first apparatus, the second apparatus, or the network exposure function network element, the communication unit may be an input/output interface, an interface circuit, an output circuit, an input circuit, a pin, a related circuit, or the like on the chip, the chip system, or the circuit; and the processing unit may be the at least one processor, a processing circuit, a logic circuit, or the like.

According to a ninth aspect, a communication apparatus is provided. The apparatus includes: a memory, configured to store a program; and at least one processor, configured to execute a computer program or instructions stored in the memory, to perform the method provided in any one of the foregoing aspects or the implementations of the foregoing aspects.

In an implementation, the apparatus is a first apparatus, a second apparatus, or a network exposure function network element.

In another implementation, the apparatus is a chip, a chip system, or a circuit used in the first apparatus, the second apparatus, or the network exposure function network element.

According to a tenth aspect, a processor is provided, and is configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application

According to an eleventh aspect, a computer-readable storage medium is provided. The computer-readable storage medium stores program code to be executed by a device, and the program code is used to perform the method provided in any one of the foregoing aspects or the implementations of the foregoing aspects.

According to a twelfth aspect, a computer program product including instructions is provided. When the computer program product runs on a computer, the computer is enabled to perform the method provided in any one of the foregoing aspects or the implementations of the foregoing aspects.

According to a thirteenth aspect, a chip is provided. The chip includes a processor and a communication interface. The processor reads, by using the communication interface, instructions stored in a memory, to perform the method provided in any one of the foregoing aspects or the implementations of the foregoing aspects.

Optionally, in an implementation, the chip further includes the memory. The memory stores a computer program or instructions. The processor is configured to execute the computer program or the instructions stored in the memory. When the computer program or the instructions is/are executed, the processor is configured to perform the method provided in any one of the foregoing aspects or the implementations of the foregoing aspects.

According to a fourteenth aspect, an industrial communication system is provided, and includes the first apparatus, the second apparatus, or the network exposure function network element described above.

### BRIEF DESCRIPTION OF DRAWINGS

FIG. 1 is a diagram of a network architecture;
FIG. 2 is a diagram of accessing a wireless communication system by an industrial device;
FIG. 3 is a schematic flowchart of a communication method according to this application;
FIG. 4 is a schematic flowchart of another communication method according to this application;
FIG. 5 shows an example of a networking manner of an industrial communication system according to this application;
FIG. 6 shows another example of a networking manner of an industrial communication system according to this application;
FIG. 7 shows another example of a networking manner of an industrial communication system according to this application;
FIG. 8 is a diagram of a design state of an industrial communication system;
FIG. 9 is a diagram (1) of a running state of an industrial communication system;
FIG. 10 is a diagram (2) of a running state of an industrial communication system;
FIG. 11 is a diagram of a fault state of an industrial communication system;
FIG. 12 is a diagram of a structure of an apparatus according to an embodiment of this application; and
FIG. 13 is another diagram of a structure of an apparatus according to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or other communication systems.

First, a network architecture applicable to this application is briefly described.

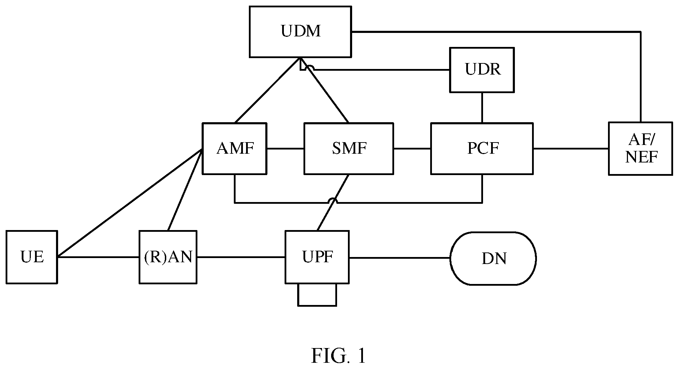

For example, FIG. 1 is a diagram of a network architecture.

As shown in FIG. 1, for example, the network architecture is a 5G system (5th generation system, 5GS). The network architecture may include three parts: a user equipment (user equipment, UE), a data network (data network, DN), and an operator network. The operator network may include one or more of the following network elements: a (radio) access network ((radio) access network, (R)AN) device, a user plane function (user plane function, UPF) network element, an access and mobility management function (access and mobility management function, AMF) network element, a session management function (session management function, SMF) network element, a policy control function (policy control function, PCF) network element, an application function (application function, AF) network element, a network exposure function (network exposure function, NEF) network element, a unified data management (unified data management, UDM) network element, and a unified data repository (unified data repository, UDR) network element. In the foregoing operator network, parts other than the RAN may be referred to as core network parts. In this application, the user equipment, the (radio) access network device, the UPF network element, the AMF network element, the SMF network element, the PCF network element, the AF network element, the NEF network element, the UDM network element, and the UDR network element are respectively referred to as a UE, a (R)AN device, a UPF, a UDR, an AMF, an SMF, an NEF, a PCF, a UDM, and an AF for short.

The following briefly describes the network elements in FIG. 1.

### 1. UE

The UE mainly accesses a 5G network through a radio air interface, and obtains a service. The UE interacts with the RAN through the air interface, and interacts with the AMF in the core network by using non-access stratum (non-access stratum, NAS) signaling.

In embodiments of this application, the UE may also be referred to as a terminal device, a user, an access terminal, a subscriber unit, a subscriber station, a mobile station, a mobile console, a remote station, a remote terminal, a mobile device, a user terminal, a terminal, a wireless communication device, a user agent, or a user apparatus. The UE may be a cellular phone, a smartwatch, a wireless data card, a mobile phone, a tablet computer, a personal digital assistant (personal digital assistant, PDA) computer, a wireless modem, a handheld device, a laptop computer, a machine-type communication (machine-type communication, MTC) terminal, a computer with a wireless transceiver function, an internet of things terminal, a virtual reality terminal device, an augmented reality terminal device, a wearable device, a vehicle, a terminal in device-to-device (device-to-device, D2D) communication, a terminal in vehicle to everything (vehicle to everything, V2X) communication, a terminal in machine-type communication (machine-type communication, MTC), a terminal in the internet of things (internet of things, IOT), a terminal in intelligent office, a terminal in industrial control, a terminal in unmanned driving, a terminal in remote surgery, a terminal in a smart grid, a terminal in transportation security, a terminal in a smart city, a terminal in a smart home, and a terminal in satellite communication (for example, a satellite phone or a satellite terminal). The UE may alternatively be a customer-premises equipment (customer-premises equipment, CPE), a telephone, a router, a network switch, a residential gateway (residential gateway, RG), a set-top box, a fixed-mobile convergence product, a home network adapter, or an internet access gateway.

A specific technology used by the UE and a specific device form of the UE are not limited in embodiments of this application.

### 2. (R)AN device

The (R)AN device may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. For ease of descriptions, the following uses an AN device for representation.

The AN device may use different radio access technologies. Currently, there are two types of radio access technologies: a 3GPP access technology (for example, a radio access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or the RAN device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX), or a code division multiple access (code division multiple access, CDMA). The AN device may allow interconnection and interworking between a terminal device and a 3GPP core network by using the non-3GPP technology.

The AN device can be responsible for functions such as radio resource management, quality of service (quality of service, QoS) management, data compression, and encryption on an air interface side. The AN device provides an access service for the terminal device, to complete forwarding of a control signal and user data between the terminal device and the core network.

For example, the AN device may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a base station (base station, BS) in WiMAX, a radio relay node, a radio backhaul node, a transmission point (transmission point, TP), or a transmission reception point (transmission reception point, TRP); or may be a gNB or a transmission point (TRP or TP) in a 5G (for example, NR) system, or one antenna panel or a group of antenna panels (including a plurality of antenna panels) of a base station in a 5G system; or may be a network node constituting a gNB or a transmission point, for example, a distributed unit (distributed unit, DU), or a base station in a next-generation 6G communication system.

A specific technology used by the AN device and a specific device form of the AN device are not limited in embodiments of this application.

### 3. UPF

The UPF, serving as an interface with a data network, is mainly responsible for functions such as user plane data forwarding, charging statistics based on a session/a flow level, and bandwidth limiting. For example, the UPF may receive user plane data from a DN, and send the user plane data to the terminal device through the AN device. The UPF may further receive the user plane data from the terminal device through the AN device, and forward the user plane data to the DN.

### 4. DN

The DN is mainly used for an operator network that provides a data service for the UE, for example, the internet (Internet), a third-party service network, and an internet protocol multi-media service (Internet protocol multi-media service, IMS) network. An application server (application server, AS) may be a part of the DN network.

### 5. AMF

The AMF is mainly responsible for functions such as mobility management, and access authentication/authorization. In addition, the AMF network element is further responsible for transferring a user policy between the UE and the PCF.

### 6. SMF

The SMF mainly performs functions such as session management (such as session establishment, modification, and release), execution of a PCF-delivered control policy, UPF selection and control, and UE internet protocol (Internet protocol, IP) address allocation and management.

### 7. PCF

The PCF is mainly responsible for policy control functions including charging on a session and a service flow-level, QoS bandwidth guarantee and mobility management, UE policy decision, and the like.

### 8. AF

The AF mainly transfers a requirement of an application side for a network side, for example, a QoS requirement or user status event subscription. The AF may be a third-party functional entity or an application service deployed by an operator, for example, an IMS voice call service. When interacting with the core network, an application function entity of a third-party application may further perform authorization processing via the NEF. For example, a third-party application function directly sends a request message to the NEF, and the NEF determines whether the AF is allowed to send the request message. If verification succeeds, the NEF forwards the request message to a corresponding PCF or UDM.

### 9. NEF

The NEF is mainly used to securely expose, to the outside, a service, a capability, and the like that are provided by a 3GPP network function.

### 10. UDM

The UDM is mainly responsible for functions such as managing subscription data and user access authorization.

### 11. UDR

The UDR mainly provides access functions of subscription data, policy data, application data, and capability exposure related data.

In the network architecture shown in FIG. 1, network elements may communicate with each other by using interfaces. An interface between the network elements may be a point-to-point interface, or may be a service-based interface. This is not limited in this application.

It should be understood that, the network architecture shown above is merely an example for descriptions, and a network architecture applicable to embodiments of this application is not limited thereto. Any network architecture that can implement functions of the foregoing network elements is applicable to embodiments of this application.

It should be further understood that, the functions or the network elements, such as the AMF, the SMF, the UPF, the PCF, the UDM, the UDR, the NEF, and the AF shown in FIG. 1 may be understood as network elements configured to implement different functions, and for example, may be combined into a network slice as required. These network elements may be independent devices, or may be integrated into a same device to implement different functions, or may be network components in a hardware device, or may be software functions running on dedicated hardware, or may be instantiated virtualization functions on a platform (for example, a cloud platform). Specific forms of the network elements are not limited in this application.

It should be further understood that, the foregoing names are defined merely for distinguishing between different functions, and should not constitute any limitation on this application. This application does not exclude a possibility of using other names in a 6G network and other networks in the future. For example, in the 6G network, a part or all of the foregoing network elements may still use terms in 5G, or may use other names.

With development of communication technologies, a wireless communication system represented by a 5G generation communication system gradually becomes a connection medium of an industrial communication system. Industrial devices on an industrial field may access a wireless communication system, and the industrial devices communicate with another industrial device by using the wireless communication system. In a possible manner, the industrial devices such as a programmable logic controller (programmable logic controller, PLC) and an input/output (input/output, I/O) device on the industrial field may implement radio access by using the CPE. In this way, a more flexible networking manner is provided for the industrial devices, and novel industrial devices that require both mobility and flexible networking can be better supported, for example, an automated guided vehicle (automated guided vehicle, AGV).

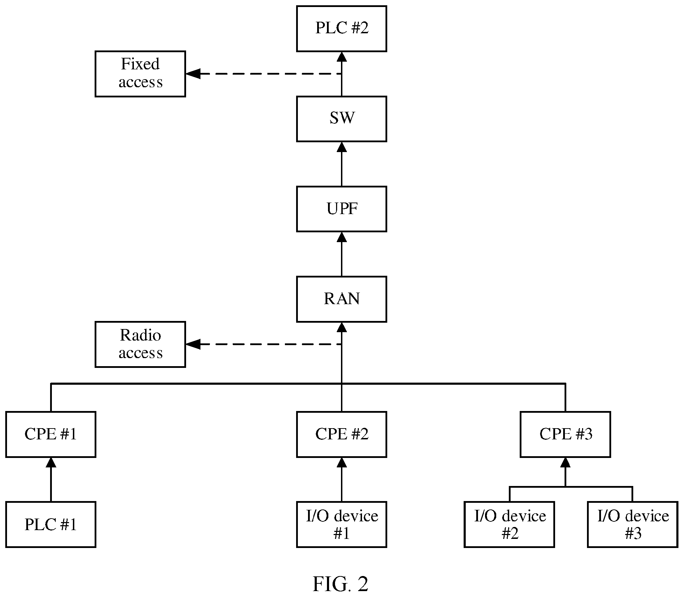

FIG. 2 is a diagram of accessing a wireless communication system by an industrial device. The wireless communication system in FIG. 2 may be the communication system shown in FIG. 1. However, this is not limited.

As shown in FIG. 2, the industrial device may access a wireless communication network via a CPE. For example, a PLC #1 may establish a connection to a RAN via a CPE #1, an I/O device #1 may establish a connection to the RAN via a CPE #2, and an I/O device #2 and an I/O device #3 may establish a connection to the RAN via a CPE #3. It should be noted that, one CPE may correspond to one or more industrial devices. For example, the CPE #1 corresponds to the PLC #1, and the CPE #3 corresponds to the I/O device #2 and the I/O device #3. It should be further noted that, the industrial device may be connected to the CPE in a wired manner or a wireless manner. This is not limited in this application. It should be further noted that, when the industrial device may have a wireless access capability, the industrial device may also directly access the wireless communication network without using the CPE. The industrial device may also establish a connection to a UPF via a switch (switch, SW). For example, a PLC #2 may establish a connection to the UPF via the SW. The industrial device may be connected to the SW in a wired manner.

The industrial devices may communicate with each other by using the wireless communication system. In a possible implementation, an industrial device at a transmitting end establishes a connection to the wireless communication system via the CPE, and then sends data or a signal to the UPF via the CPE and the RAN. The UPF sends the received data or signal to a RAN accessed by an industrial device at a receiving end, and then sends the received data or signal to the industrial device at the receiving end. Communication between the PLC #1 and the I/O device #1 is used as an example. The PLC #1 sends data or a signal to the CPE #1, the CPE #1 sends the data or the signal to the RAN accessed by the CPE #1, and the RAN sends the data to the UPF. The UPF sends the received data to the RAN accessed by the I/O device #1 via the CPE #2, and the RAN sends the received data or signal to the I/O device #1 via the CPE #2. For more detailed descriptions, refer to related content in 3GPP 23.501 4.4.6. Details are not described herein.

Compared with a network status of a wired connection medium, a network status of the wireless communication system is constantly changing. The constantly changing network status of the wireless communication system affects a service.

For the foregoing case, this application provides a communication method and a communication apparatus, so that an apparatus in an industrial communication system outputs information to a wireless communication system, and the wireless communication system can schedule the apparatus in the industrial communication system more properly based on the information, to reduce impact of a network status of the wireless communication system on a service.

For ease of understanding of embodiments of this application, before embodiments of this application are described, the following descriptions are first provided.

First, in this application, whether a communication apparatus belongs to a wireless communication system or an industrial communication system is not strictly distinguished. The wireless communication system is a connection medium in the industrial communication system. The wireless communication system may be considered as a part of the industrial communication system. In other words, the industrial communication system may be considered as a part of the wireless communication system. This is not limited in this application. For example, a second apparatus involved below may be used as an I/O device in an industrial communication network, or may be used as a network element in wireless communication information, so that the second apparatus may be used as an interface, to implement communication between the industrial communication system and the wireless communication system.

Second, in this application, the industrial communication system may also be referred to as the industrial communication network, an industrial field network, an industrial Ethernet, an industrial communication network system, or the like, which are collectively referred to as the industrial communication system below for ease of descriptions. The wireless communication system may also be referred to as a wireless communication system network, a wireless communication network, a 3GPP network, a wireless network, or the like, which are collectively referred to as the wireless communication system below for ease of descriptions.

A communication protocol used in the industrial communication network is not specifically limited in this application. For example, the industrial communication network uses high speed Ethernet (high speed Ethernet, HSE), Modbus, Profinet, Profibus, Ethernet/IP, EtherCAT, and the like.

Third, in this application, "indicate" may include "directly indicate" and "indirectly indicate", or "indicate" may include "explicitly and/or implicitly indicate" For example, when a piece of information is described as indicating information I, it may indicate that the information directly indicates I or indirectly indicates I, but it does not indicate that the information definitely carries I. For another example, "implicit indication" may be based on a location and/or resource used for transmission; and "explicit indication" may be based on one or more parameters, and/or one or more indices, and/or one or more bit patterns represented by "explicit indication".

Fourth, definitions of many features listed in this application are merely used to explain functions of the features by using examples. For detailed content of the definitions, refer to the conventional technology.

Fifth, the terms "first", "second", "third", "fourth", and various numbers in the following embodiments are merely used for differentiation for ease of descriptions, but are not used to limit the scope of embodiments of this application, for example, are used to distinguish between different fields, different information, and different messages.

Sixth, "predefined" may be implemented by prestoring corresponding code or a corresponding table in a device (for example, including a network device), or may be implemented in another manner that may indicate related information. A specific implementation thereof is not limited in this application. "Stored" may be "stored in one or more memories". The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Seventh, a "protocol" in embodiments of this application may be a standard protocol in the communication field, for example, may include an LTE protocol, an NR protocol, and a related protocol applied to a future communication system. This is not limited in this application.

Eighth, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one of a, b, and c may indicate a, b, c, a and b, a and c, b and c, or a, b, and c. Each of a, b, and c may be in a singular form or a plural form.

The following describes, in detail with reference to the accompanying drawings, a communication method provided in this application. Embodiments of this application may be applied to the network architecture shown in FIG. 2. However, this is not limited.

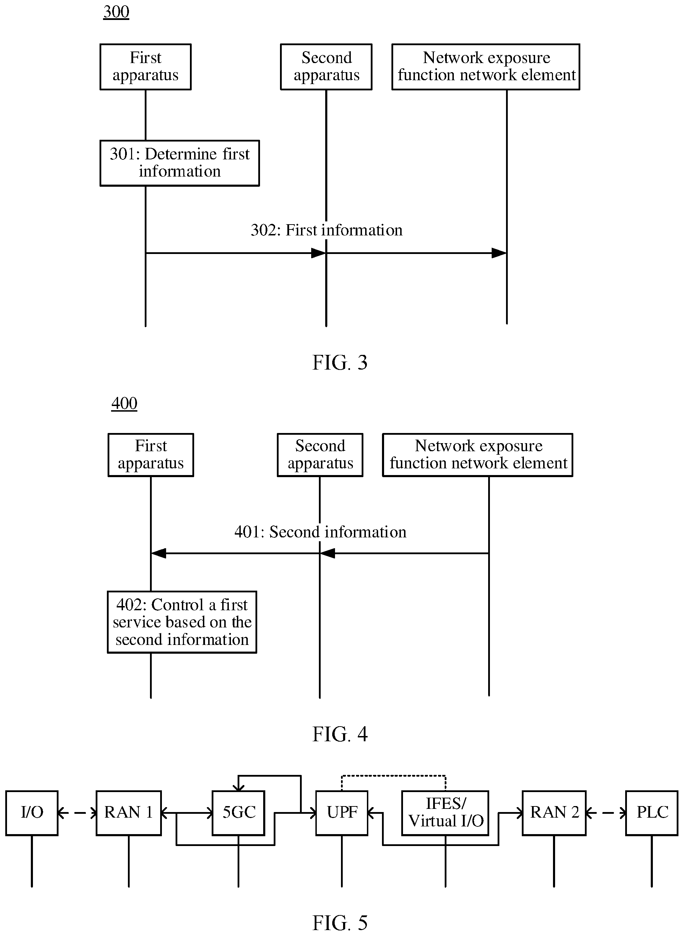

FIG. 3 is a schematic flowchart of a communication method according to this application.

The method 300 shown in FIG. 3 is applied to an industrial communication system. A first apparatus in the industrial communication system may communicate with another apparatus in the industrial communication system by using a wireless communication system. The method 300 may be performed by the first apparatus and a second apparatus in the industrial communication system, or may be performed by modules or units used in the first apparatus and a second apparatus. For uniform descriptions below, the method is performed by the first apparatus and the second apparatus.

The method 300 shown in FIG. 3 may include at least a portion of the following content.

Step 301: The first apparatus determines first information.

The first information is used for wireless communication scheduling of the first apparatus.

In a possible implementation, the first information includes configuration information of the industrial communication system, first request information, and/or service status information of the first apparatus.

The configuration information of the industrial communication system may include at least one of the following information: a length of a PNIO (Profinet I/O) message of a stream corresponding to each I/O device in the industrial communication system, a communication period corresponding to each I/O device, a watchdog time/factor, a communication relationship between a PLC and each I/O device, and the like. The first request information is used to request the wireless communication system to adjust scheduling information of the first apparatus. The service status information of the first apparatus may include end-to-end (end-to-end, E2E) packet loss status information, I/O status information, and the like. The I/O status information may indicate that an I/O status is normal or faulty, and the E2E packet loss status information and the I/O status information are E2E packet loss status information and I/O status information for one I/O.

The first apparatus herein may be a PLC or an I/O device in the industrial communication system.

Step 302: The first apparatus sends the first information to a network exposure function network element in a wireless communication network.

Correspondingly, the network exposure function network element receives the first information from the first apparatus.

In a possible implementation, a manner in which the first apparatus sends the first information to the network exposure function network element may be shown in FIG. 3. To be specific, the first apparatus sends the first information to the NEF in the wireless communication network via the second apparatus, where the second apparatus supports communication with the network exposure function network element in the wireless communication network.

The second apparatus herein may be used as both an I/O device in the industrial communication system and a device in the wireless communication system. The network exposure function network element may be the NEF shown in FIG. 1, or may be another network element that has a function the same as or similar to a function of the NEF, for example, a service capability exposure function (service capability exposure function, SCEF).

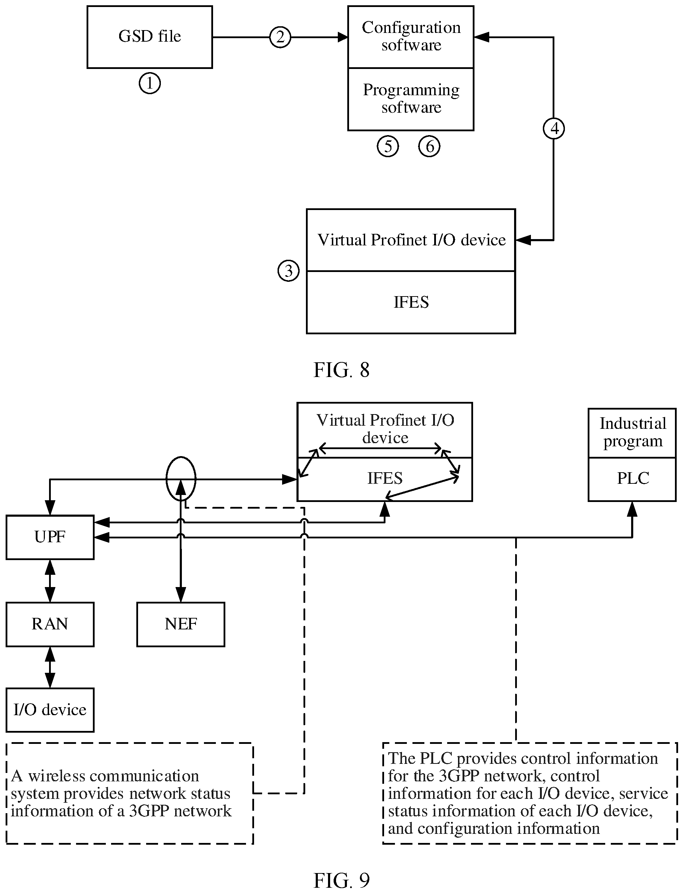

In an example, the second apparatus is a function instance established on a first AF, and the function instance has a function of the I/O device, so that the function instance has a capability of communicating with an industrial device (for example, the I/O device or the PLC) in the industrial communication system. The function instance is established on the first AF. Therefore, the function instance may communicate with a network element in the wireless communication system via the first AF. For example, the first AF may communicate with another network element in the wireless communication system via the network exposure function network element. In this way, the function instance also has a capability of communicating with the network element in the wireless communication system. Specific implementations of a design and configuration of the second apparatus are described by using an example with reference to FIG. 8 below.

"The second apparatus supports communication with the network exposure function network element in the wireless communication network" may be that the second apparatus has a capability of directly communicating with the network exposure function network element in the wireless communication network, or may be that the second apparatus indirectly communicates with the network exposure function network element in the wireless communication network. For example, if the second apparatus is the function instance established on the first AF, the second apparatus may send the first information to the network exposure function network element via the first AF.

In another possible implementation, if the first apparatus has a capability of directly communicating with the network exposure function network element in the wireless communication network, the first apparatus may also send the first information to the NEF in the wireless communication network without using the second apparatus.

In this way, in the method 300, the network exposure function network element in the wireless communication system may obtain, from the first apparatus, the information used for the wireless communication scheduling of the first apparatus. In other words, the apparatus in the industrial communication system can output the information to the wireless communication system, so that the wireless communication system can schedule the apparatus in the industrial communication system based on the information. This helps the wireless communication system schedule the apparatus in the industrial communication system more properly, to reduce impact of a network status of the wireless communication system on a service.

Based on the foregoing content, the first apparatus in the industrial communication system can output, to the wireless communication system, the information used for the wireless communication scheduling of the first apparatus. In some other embodiments, the wireless communication system may also output, to the industrial communication system, information used to control a service. The following describes a manner in which the wireless communication system outputs, to the industrial communication system, the information used to control the service.

FIG. 4 is a schematic flowchart of another communication method according to this application.

The method 400 shown in FIG. 4 is applied to an industrial communication system. A first apparatus in the industrial communication system may communicate with another apparatus in the industrial communication system by using a wireless communication system. The method 400 may be performed by the first apparatus and a second apparatus in the industrial communication system, or may be performed by modules or units used in the first apparatus and a second apparatus. For uniform descriptions below, the method is performed by the first apparatus and the second apparatus.

The method 400 shown in FIG. 4 may include at least a portion of the following content.

Step 401: The first apparatus obtains second information from a network exposure function network element in the wireless communication system.

The second information includes network status information of the wireless communication system. The second information may be used to control a first service. The first service herein may be a service executed by the industrial communication system or the first apparatus.

In a possible implementation, the network status information includes at least one of the following information: wireless network status information of the first apparatus, air interface capacity information of the wireless communication system, and a network connection relationship of the wireless communication system.

The wireless network status information of the first apparatus may include at least one of the following information: communication service availability (communication service availability), communication service reliability (communication service reliability), an end-to-end latency (end-to-end latency), a service bit rate (service bit rate), a packet error ratio (packet error ratio), and the like. The air interface capacity information of the wireless communication system may include at least one of the following information: a remaining air interface capacity of the wireless communication system, a used air interface capacity of the wireless communication system, an air interface congestion status of the wireless communication system, air interface channel quality of the wireless communication system, and the like. The network connection relationship of the wireless communication system may include a connection relationship of the first apparatus in the wireless communication system, that is, a connection relationship between the first apparatus and a network device that provides a service for the first apparatus in the wireless communication system, for example, a RAN accessed by the first apparatus, a used UPF, or the like.

The first apparatus herein may be a PLC or an I/O device in the industrial communication system, or may be a first AF, where the first AF is a network element related to industrial production. The network exposure function network element may be the NEF shown in FIG. 1, or may be another network element that has a function the same as or similar to a function of the NEF, for example, an SCEF.

In a possible implementation, a manner in which the first apparatus obtains the second information from the network exposure function network element may be shown in FIG. 4. To be specific, the first apparatus may obtain the second information from the network exposure function network element via the second apparatus. For descriptions of the second apparatus, refer to the related descriptions in FIG. 3. Details are not described herein again.

In another possible implementation, if the first apparatus has a capability of directly communicating with the NEF in the wireless communication network, the first apparatus may also directly obtain the second information from the network exposure function network element without using the second apparatus. For example, if the first apparatus is the first AF, the first apparatus may directly obtain the second information from the network exposure function network element. For another example, if the first apparatus is a PLC that has a capability of directly communicating with the network exposure function network element, the first apparatus may directly obtain the second information from the network exposure function network element.

Step 402: The first apparatus controls the first service based on the second information.

In a possible implementation, the first apparatus performs service degradation on the first service based on the second information when a fault occurs in the industrial communication system and/or a fault occurs in the wireless communication system. Compared with direct shutdown upon receiving of a fault signal, in this case, impact of the fault on the first service can be reduced.

For example, the first apparatus receives the fault signal of the industrial communication system, and determines, based on the second information, that a network status of the wireless communication system fluctuates greatly. In this case, an alarm signal received by the first apparatus may be caused by a poor network status of the wireless communication system. Therefore, the first apparatus may first perform service degradation on the first service, and then normally execute the first service after the network status of the wireless communication system is restored.

In another possible implementation, the first apparatus determines preset waiting duration based on the second information when the fault occurs in the industrial communication system and/or the fault occurs in the wireless communication network; and the first apparatus terminates the first service if the fault in the first apparatus and/or the fault in the wireless communication system are/is not rectified within the preset duration. Compared with direct shutdown upon receiving of a fault signal, in this case, impact of the fault on the first service can be reduced.

In this way, in the method 400, the first apparatus in the industrial communication system can obtain the network status information of the wireless communication system, and then control a device in the industrial communication system based on the obtained network status information, to implement service control. When controlling the device in the industrial communication system, the first apparatus considers a factor of the network status of the wireless communication system, which helps reduce impact of a network status change of the wireless communication system on a service.

It should be noted that, embodiments of this application may be implemented independently, or may be implemented together. For example, the method shown in FIG. 3 and the method shown in FIG. 4 may be implemented independently, or may be implemented together. In addition, when the method shown in FIG. 3 and the method shown in FIG. 4 are implemented together, a sequence of the steps in FIG. 3 and FIG. 4 is not limited in this application. For example, the first apparatus may control the first service based on the first information and the second information. For another example, the first apparatus may first receive the second information, and determine first request information based on the second information, where the first request information is used by the wireless communication system to adjust scheduling information of the first apparatus.

The following describes the technical solution of this application in detail with reference to specific examples. In the following examples, the wireless communication system is a 3GPP network, the industrial communication system uses the Profinet protocol, and the network exposure function network element is an NEF

FIG. 5 to FIG. 7 show examples of a networking manner of an industrial communication system according to this application. A solid line represents a wired connection, a dashed line represents a wireless connection, and a dotted line represents a connection through an internal interface. An IFES may correspond to the first AF described above, and a virtual Profinet I/O device may correspond to the second apparatus described above.

As shown in FIG. 5, I/O is connected to a RAN 1 in a wireless manner, the RAN 1, a 5G core network (5G core, 5GC), a UPF, and a RAN 2 are connected in a wired manner, the UPF is connected to an IFES or a virtual Profinet I/O device through an internal interface, and a PLC is connected to the RAN 2 in a wireless manner. In the networking manner shown in FIG. 5, the I/O and the PLC have a wireless access capability. In other words, the I/O and the PLC may directly communicate with a RAN. The UPF and the IFES or the virtual Profinet I/O device are disposed together, for example, disposed together on a same physical device.

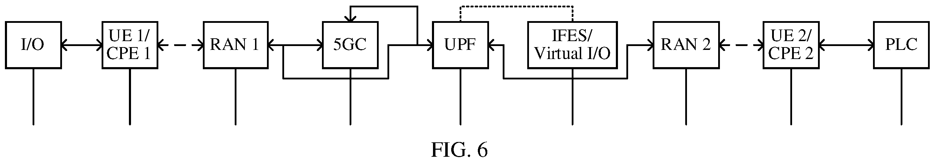

As shown in FIG. 6, I/O and a PLC implement radio access via a UE or a CPE. Specifically, the I/O is connected to a UE 1 or a CPE 1 in a wired manner, the UE 1 or the CPE 1 is connected to a RAN 1 in a wireless manner, the RAN 1, 5GC, a UPF, and a RAN 2 are connected in a wired manner, the UPF is connected to an IFES or a virtual Profinet I/O device through an internal interface, the RAN 2 is connected to a UE 2 or a CPE 2 in a wireless manner, and the UE 2 or the CPE 2 is connected to the PLC in a wired manner. In the networking manner shown in FIG. 6, the I/O and the PLC do not have a wireless access capability. In other words, the I/O and the PLC need to communicate with a RAN via the UE or the CPE. The UPF and the IFES or the virtual Profinet I/O device are disposed together, for example, disposed together on a same physical device.

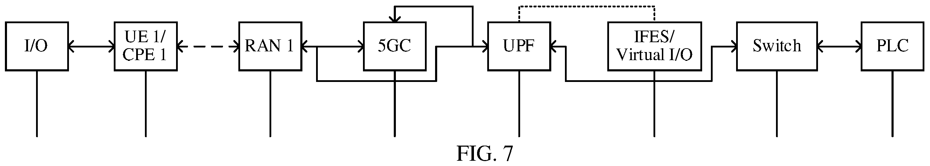

As shown in FIG. 7, I/O implements radio access via a UE or a CPE, and a PLC is connected to a UPF via an SW. Specifically, the I/O is connected to a UE 1 or a CPE 1 in a wired manner, the UE 1 or the CPE 1 is connected to a RAN 1 in a wireless manner, the RAN 1, 5GC, the UPF, and the SW are connected in a wired manner, the UPF is connected to an IFES or a virtual Profinet I/O device through an internal interface, and the SW is connected to the PLC in a wired manner. In the networking manner shown in FIG. 7, the I/O and the PLC do not have a wireless access capability. The UPF and the IFES or the virtual Profinet I/O device are disposed together, for example, disposed together on a same physical device.

In the foregoing descriptions, the UPF and the IFES or the virtual Profinet I/O device are disposed together. For example, a multi-access edge computing (multi-access edge computing, MEC) system implements functions of the UPF and the IFES or the virtual Profinet I/O device.

It should be noted that, FIG. 5 to FIG. 7 are merely examples, and the industrial communication system in this application may also use another networking manner. For example, the UPF and the IFES or the virtual Profinet I/O device are separately disposed. For another example, the I/O device is directly connected to the RAN, and the PLC is connected to the UPF via the SW. For ease of descriptions, descriptions are provided below by using the networking manner shown in FIG. 5.

FIG. 8 is a diagram of a design state of an industrial communication system.

Step 1: Compile a generic station description (generic station description, GSD) file of a virtual Profinet I/O device, and define an input variable and an output variable of the virtual Profinet I/O device.

The input variable of the virtual Profinet I/O device corresponds to input of the virtual Profinet I/O device, and the output variable of the virtual Profinet I/O device corresponds to output of the virtual Profinet I/O device.

### (1) From a 3GPP network to the industrial communication system

The input and the output of the virtual Profinet I/O device may include at least one of the following information: network status information of the 3GPP network and control information for an I/O device. The network status information of the 3GPP network may include at least one of the following information: wireless status information of a wireless air interface connection of the I/O device, air interface capacity information of a wireless communication system, and a network connection relationship of the 3GPP network.

In other words, the 3GPP network may input the foregoing information into the virtual Profinet I/O device, so that the virtual Profinet I/O device can output the foregoing information to the industrial communication system.

The wireless status information of the wireless air interface connection of the I/O device may include at least one of the following information: communication service availability, communication service reliability, an end-to-end latency, a service bit rate, a packet error ratio, and the like. The air interface capacity information of the 3GPP network may include at least one of the following information: a remaining air interface capacity of the 3GPP network, a used air interface capacity of the 3GPP network, an air interface congestion status of the 3GPP network, air interface channel quality of the 3GPP network, and the like. The network connection relationship of the 3GPP network may include a connection relationship of the I/O device in the wireless communication system, that is, a connection relationship between the I/O device and a network device that provides a service for the I/O device in the 3GPP network. The control information for each I/O device may be a service packet sent to the I/O device.

A quantity of I/O devices is not specifically limited in this application.

### (2) From the industrial communication system to the 3GPP network

The input and the output of the virtual Profinet I/O device may include at least one of the following information: control information for the 3GPP network, service status information of each I/O device, and configuration information of the industrial communication system.

In other words, the industrial communication system may input the foregoing information into the virtual Profinet I/O device, so that the virtual Profinet I/O device can output the foregoing information to the 3GPP network.

The control information for the 3GPP network may be a management configuration packet for the 3GPP network. The service status information of the I/O device may include E2E packet loss status information, I/O status information, and the like. The I/O status information may indicate that an I/O status is normal or faulty, and the E2E packet loss status information and the I/O status information are E2E packet loss status information and I/O status information for one I/O. The configuration information of the industrial communication system may include at least one of the following information: a length of a PNIO (profinet I/O) message of a stream corresponding to each I/O device, a communication period corresponding to each I/O device, a watchdog time/factor, a communication relationship between a PLC and each I/O device.

### (3) From the industrial communication system to the industrial communication system

The input and the output of the virtual Profinet I/O device may include control information for the I/O device. In other words, an industrial device in the industrial communication system may output the foregoing information to another industrial device via the virtual Profinet I/O device.

It should be noted that, the input and the output of the virtual Profinet I/O device may be some or all of (1), (2), and (3).

Step 2: Load the GSD file of the virtual Profinet I/O device in configuration software.

Step 3: Create a virtual Profinet I/O device instance on an IFES, and add the virtual Profinet I/O device instance to a specified industrial communication system.

Step 4: Perform a device discovery process in the configuration software, find a newly added virtual Profinet I/O device, and set parameters for the virtual Profinet I/O device.

Step 5: Map the input variable and the output variable of the virtual Profinet I/O device in programming software (for example, an integrated development environment (integrated development environment, IDE)).

Step 6: Write a program in the programming software.

The program may process the network status information of the 3GPP network, and obtain the control information for the 3GPP network and/or the control information for each I/O device. The program is downloaded to the PLC, so that the PLC controls the 3GPP network and/or the I/O device by executing the program.

It should be noted that, to distinguish from the Profinet I/O device, the term "I/O device" in this application is a real I/O device in an industrial field network.

It should be further noted that, the configuration software and the programming software used for designing the industrial communication system are not limited in this application, provided that the foregoing functions or steps can be implemented.

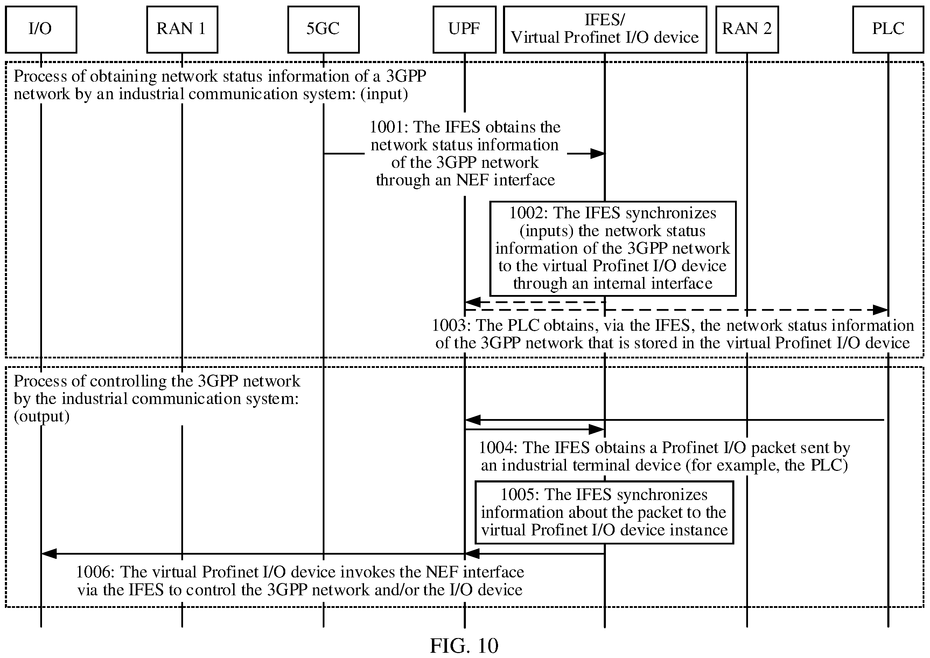

FIG. 9 and FIG. 10 each are a diagram of a running state of an industrial communication system.

As shown in FIG. 9, after a virtual Profinet I/O device joins an industrial communication system (for example, in the manner shown in FIG. 8), the virtual Profinet I/O device may be used as an intermediary for communication between a PLC and a 3GPP network. In other words, the 3GPP network may be considered as an I/O device in the industrial communication system. The industrial communication system (for example, the PLC in the industrial communication system) may communicate with the virtual Profinet I/O device, to obtain network status information of the 3GPP network and/or control the 3GPP network. Specifically, the virtual Profinet I/O device obtains the network status information of the 3GPP network via an IFES and an NEF, and provides information about an industrial communication network for the 3GPP network via the IFES and the NEF. The industrial communication system (for example, the PLC in the industrial communication system) may provide, for the virtual Profinet I/O device, wireless scheduling information used to schedule the PLC or the I/O device in the industrial communication system, so that the virtual Profinet I/O device sends corresponding information to the 3GPP network or controls the 3GPP network.

A specific working process of the industrial communication system may be shown in FIG. 10.

### (1) Process of obtaining network status information of a 3GPP network by an industrial communication system

Step 1001: An IFES obtains the network status information of the 3GPP network from an NEF through an interface between the IFES and the NEF.

Step 1002: The IFES synchronizes the network status information of the 3GPP network to a virtual Profinet I/O device through an internal interface.

Step 1003: A PLC obtains, via a UPF, the network status information of the 3GPP network that is stored in the virtual Profinet I/O device.

It should be noted that, step 1003 is an optional step. For example, when the virtual Profinet I/O device controls the 3GPP network, the PLC may not need to obtain the network status information of the 3GPP network.

### (2) Process of controlling the 3GPP network by the industrial communication system

Step 1004: The IFES obtains a Profinet I/O packet from an industrial device via a RAN and the UPF.

For example, when the industrial device is an I/O device, the IFES obtains the Profinet I/O packet from the I/O device via a RAN 1 and the UPF. The Profinet I/O packet may include E2E packet loss status information, I/O status information, and the like.

For another example, when the industrial device is the PLC, the IFES obtains the Profinet I/O packet from the PLC via a RAN 2 and the UPF. The Profinet I/O packet may include at least one of the following information: control information for the 3GPP network, control information for each I/O device, communication status information of each I/O device, and configuration information.

Step 1005: The IFES synchronizes the obtained Profinet I/O packet to the virtual Profinet I/O device through the internal interface.

Step 1006: The virtual Profinet I/O device invokes the NEF interface via the IFES, to implement control on the 3GPP network and/or the I/O device.

The control on the 3GPP network may include: configuring a priority of the I/O device, requesting the 3GPP network to reserve a resource for a specific service, requesting the 3GPP network to release a resource for a specific service, and the like. This is not limited in this application.

It should be noted that, in addition to sending the Profinet I/O packet to the I/O device via the UPF, the IFES, the virtual Profinet I/O device, and the RAN 1, the PLC may also send the Profinet I/O packet to the I/O device via the RAN 2, the UPF, and the RAN 1.

It should be noted that, the foregoing processes (1) and (2) may be separately implemented, or may be implemented together in a proper manner. This is not limited in this application. The foregoing processes (1) and/or (2) may be continuously performed based on a specific period, or may be performed in some special cases, for example, performed when the I/O device is faulty, a production task is updated, or a production task is initialized.

For detailed descriptions of the information in FIG. 9 and FIG. 10, refer to the descriptions in FIG. 8. Details are not described herein again.

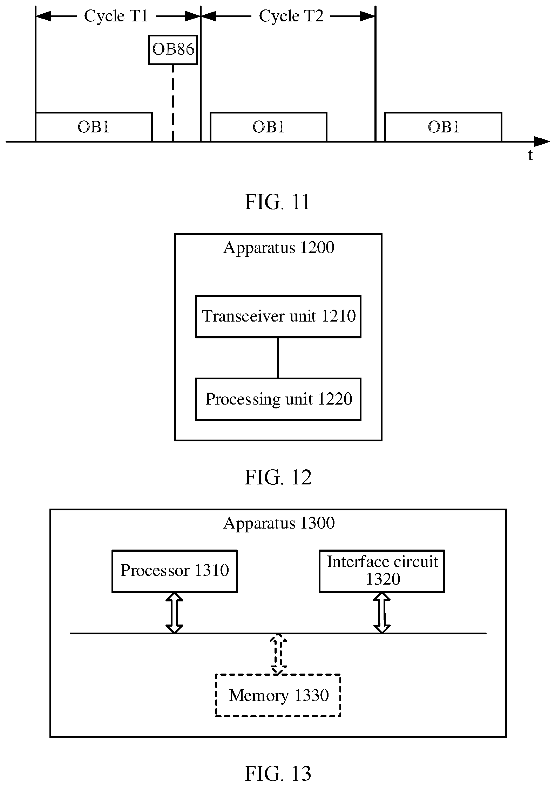

FIG. 11 is a diagram of a fault state of an industrial communication system.

In this application, when an I/O device is faulty, instead of directly sending a shutdown instruction to the I/O device to wait for maintenance performed by a worker, a PLC in this application may determine, based on network status information of a 3GPP network, whether a shutdown condition is met. If the shutdown condition is not met, the PLC may control the I/O device to implement service degradation or continue to wait for several cycle periods.

When step 6 in FIG. 8 is performed, an interrupt program may be written, to handle an I/O fault of an industrial field network. For example, an interrupt OB may be defined, and the interrupt OB is used to detect whether the I/O fault occurs in the industrial communication system.

In an example, the I/O device is faulty. When the I/O fault occurs in the industrial communication system, the PLC may handle the I/O fault based on the network status information of the 3GPP network. In a possible implementation, the PLC determines, based on the network status information of the 3GPP network, whether the shutdown condition is met. If the shutdown condition is not met, the PLC may control the I/O device to implement service degradation or continue to wait for several cycle periods. For example, as shown in FIG. 11, in a cycle period T 1, an IFES learns that the I/O device is faulty. The IFES sends alarm information to the PLC via a virtual Profinet I/O device, and triggers an interrupt OB86 of the PLC, to notify the PLC that the I/O device is faulty. After learning that the I/O device is faulty, the PLC determines, based on the network status information of the 3GPP network, to continue to wait for several cycle periods (for example, two cycle periods) for the I/O device. If no packet from the I/O device is received within the cycle periods, the PLC delivers a shutdown instruction.

In another example, network quality of the 3GPP network deteriorates, or it may be understood that, a fault occurs in the 3GPP network. When the network quality of the 3GPP network deteriorates, the PLC may determine, based on the current network status information of the 3GPP network, whether the shutdown condition is met. If the shutdown condition is not met, the PLC may control the I/O device to implement service degradation. For example, the PLC may send a control instruction to the I/O device, to control the I/O device to implement service degradation.

The foregoing describes, in detail with reference to FIG. 3 to FIG. 11, the method provided in this application. The following describes in detail apparatus embodiments of this application with reference to FIG. 12 and FIG. 13. It may be understood that, to implement the functions in the foregoing embodiments, an apparatus in FIG. 12 or FIG. 13 includes a corresponding hardware structure and/or software module for performing each function. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

FIG. 12 and FIG. 13 are diagrams of structures of possible apparatuses according to embodiments of this application. These apparatuses may be configured to implement the method performed by the first apparatus, the second apparatus, or the network exposure function network element in the foregoing method embodiments, and therefore can also implement beneficial effects of the foregoing method embodiments.

As shown in FIG. 12, the apparatus 1200 includes a transceiver unit 1210 and a processing unit 1220.

When the apparatus 1200 is configured to implement a function of the second apparatus in the foregoing method embodiment, the transceiver unit 1210 is configured to: obtain first information from the first apparatus, where the first information is used for wireless communication scheduling of the first apparatus; and send the first information to the network exposure function network element in the wireless communication system. Optionally, the transceiver unit 1210 is further configured to: obtain second information from the network exposure function network element, where the second information includes network status information of the wireless communication network; and send the second information to the first apparatus.

Alternatively, the transceiver unit 1210 is configured to: obtain second information from the network exposure function network element in the wireless communication system, where the second information includes network status information of the wireless communication network; and send the second information to the first apparatus. Optionally, the transceiver unit 1210 is further configured to: obtain first information from the first apparatus, where the first information is used for wireless communication scheduling of the first apparatus; and send the first information to the network exposure function network element in the wireless communication system.

Optionally, the first information includes at least one of the following information: first request information, service status information of the first apparatus, and configuration information of the industrial communication system, and the first request information is used to request the wireless communication system to adjust scheduling information of the first apparatus.

Optionally, the network status information includes at least one of the following information: wireless network status information of the first apparatus, air interface capacity information of the wireless communication system, and a network connection relationship of the wireless communication system.

Optionally, the second apparatus is a function instance established on a first application function network element.

Optionally, the first apparatus includes a control device and/or a controlled device. The control device may be a PLC, a DCS, an FCS, or the like. The controlled device may be an I/O device, an industrial terminal device, or the like.

When the apparatus 1200 is configured to implement a function of the first apparatus in the foregoing method embodiment, the processing unit 1220 is configured to determine first information, where the first information is used for wireless communication scheduling of the first apparatus; and the transceiver unit 1210 is configured to send the first information to the network exposure function network element in the wireless communication system. Optionally, the transceiver unit 1210 is further configured to obtain second information from the network exposure function network element, where the second information includes network status information of the wireless communication system; and the processing unit 1220 is further configured to control a first service based on the second information.

Alternatively, the transceiver unit 1210 is configured to obtain second information from the network exposure function network element in the wireless communication system, where the second information includes network status information of the wireless communication system; and the processing unit 1220 is configured to control a first service based on the second information. Optionally, the processing unit 1220 is further configured to determine first information, where the first information is used for wireless communication scheduling of the first apparatus; and the transceiver unit 1210 is further configured to send the first information to the network exposure function network element in the wireless communication system.

Optionally, the first information includes at least one of the following information: first request information, service status information of the first apparatus, and configuration information of the industrial communication system, and the first request information is used to request the wireless communication system to adjust scheduling information of the first apparatus.

Optionally, the transceiver unit 1210 is specifically configured to send the first information to the network exposure function network element via the second apparatus, where the second apparatus supports communication with the network exposure function network element.

Optionally, the transceiver unit 1210 is specifically configured to obtain the second information from the network exposure function network element via the second apparatus, where the second apparatus supports communication with the network exposure function network element.

Optionally, the network status information includes at least one of the following information: wireless network status information of the first apparatus, air interface capacity information of the wireless communication system, and a network connection relationship of the wireless communication system.

Optionally, the processing unit 1220 is specifically configured to perform service degradation on the first service based on the second information when a fault occurs in the industrial communication system and/or a fault occurs in the wireless communication system.

Optionally, the processing unit 1220 is specifically configured to: determine preset waiting duration based on the second information when the fault occurs in the industrial communication system and/or the fault occurs in the wireless communication network; and terminate the first service if the fault in the industrial communication system and/or the fault in the wireless communication system are/is not rectified within the preset duration.

Optionally, the second apparatus is a function instance established on a first application function network element.

Optionally, the first apparatus includes at least one of a control device, a controlled device, or an AF. The control device may be a PLC, a DCS, an FCS, or the like. The controlled device may be an I/O device, an industrial terminal device, or the like.

When the apparatus 1200 is configured to implement a function of the network exposure function network element in the foregoing method embodiment, the transceiver unit 1210 is configured to: receive first information from the first apparatus, where the first information is used for wireless communication scheduling of the first apparatus; and/or send second information to the first apparatus, where the second information includes network status information of the wireless communication system. The first apparatus belongs to the industrial communication system, and the network exposure function network element belongs to the wireless communication system.

Optionally, the transceiver unit 1210 is specifically configured to: receive the first information from the first apparatus via the second device, and/or send the second information to the first apparatus via the second apparatus.

Optionally, the first information includes at least one of the following information: first request information, service status information of the first apparatus, and configuration information of the industrial communication system, and the first request information is used to request the wireless communication system to adjust scheduling information of the first apparatus.

Optionally, the network status information includes at least one of the following information: wireless network status information of the first apparatus, air interface capacity information of the wireless communication system, and a network connection relationship of the wireless communication system.

Optionally, the second apparatus is a function instance established on a first application function network element.

Optionally, the first apparatus includes a control device and/or a controlled device. The control device may be a PLC, a DCS, an FCS, or the like. The controlled device may be an I/O device, an industrial terminal device, or the like.

For more detailed descriptions of the transceiver unit 1210 and the processing unit 1220, refer to related descriptions in the foregoing method embodiments. Details are not described herein again.

As shown in FIG. 13, the apparatus 1300 includes a processor 1310 and an interface circuit 1320. The processor 1310 and the interface circuit 1320 are coupled to each other. It may be understood that, the interface circuit 1320 may be a transceiver or an input/output interface. Optionally, the apparatus 1300 may further include a memory 1330, configured to store instructions executed by the processor 1310, input data required for running instructions by the processor 1310, or data generated after the processor 1310 runs the instructions. When the apparatus 1300 is configured to implement the method described above, the processor 1310 is configured to implement a function of the processing unit 1220, and the interface circuit 1320 is configured to implement a function of the transceiver unit 1210.

When the apparatus 1300 is a chip used in a first apparatus, the chip implements a function of the first apparatus in the foregoing method embodiments. The chip receives information from another module (for example, a radio frequency module or an antenna) in the first apparatus, where the information is sent by another apparatus to the first apparatus; or the chip sends information to another module (for example, a radio frequency module or an antenna) in the first apparatus, where the information is sent by the first apparatus to another apparatus.

When the apparatus 1300 is a chip used in a second apparatus, the chip implements a function of the second apparatus in the foregoing method embodiments. The chip receives information from another module (for example, a radio frequency module or an antenna) in the second apparatus, where the information is sent by another apparatus to the second apparatus; or the chip sends information to another module (for example, a radio frequency module or an antenna) in the second apparatus, where the information is sent by the second apparatus to another apparatus.

When the apparatus 1300 is a chip used in a network exposure function network element, the chip implements a function of the network exposure function network element in the foregoing method embodiments. The chip receives information from another module (for example, a radio frequency module or an antenna) in the network exposure function network element, where the information is sent by another apparatus to the network exposure function network element; or the chip sends information to another module (for example, a radio frequency module or an antenna) in the network exposure function network element, where the information is sent by the network exposure function network element to another apparatus.

This application further provides a communication apparatus, including a processor. The processor is coupled to a memory. The memory is configured to store a computer program or instructions and/or data. The processor is configured to: execute the computer program or the instructions stored in the memory, or read data stored in the memory, to perform the method in the foregoing method embodiments. Optionally, there are one or more processors. Optionally, the communication apparatus includes the memory. Optionally, there are one or more memories. Optionally, the memory and the processor are integrated together, or are disposed separately.

This application further provides a computer-readable storage medium. The computer-readable storage medium stores computer instructions used to implement the method performed by the first apparatus, the second apparatus, or the network exposure function network element in the foregoing method embodiments.

This application further provides a computer program product, including instructions. When the instructions are executed by a computer, the method performed by the first apparatus, the second apparatus, or the network exposure function network element in the foregoing method embodiments is implemented.

This application further provides a communication system. The communication system includes the first apparatus, the second apparatus, or the network exposure function network element in the foregoing embodiments.

For explanations and beneficial effects of related content of any one of the apparatuses provided above, refer to the corresponding method embodiment provided above. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented by using hardware, or may be implemented by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may also be a component of the processor. The processor and the storage medium may be disposed in an ASIC. In addition, the ASIC may be located in the first apparatus, the second apparatus, or the network exposure function network element. Certainly, the processor and the storage medium may also exist in the first apparatus, the second apparatus, or the network exposure function network element as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, various numbers in embodiments of this application are merely used for differentiation for ease of descriptions, and are not used to limit the scope of embodiments of this application. The sequence numbers of the foregoing processes do not mean execution sequences, and the execution sequences of the processes should be determined based on functions and internal logic of the processes.

Unless otherwise stated, meanings of all technical and scientific terms used in embodiments of this application are the same as those usually understood by a person skilled in the technical field of this application. The terms used in this application are merely intended to describe objectives of the specific embodiments, and are not intended to limit the scope of this application. It should be understood that, the foregoing description is an example for descriptions, and the foregoing examples are merely intended to help a person skilled in the art understand embodiments of this application, but are not intended to limit embodiments of this application to specific numbers or specific scenarios of the examples. It is clear that a person skilled in the art can make various equivalent modifications or changes based on the examples provided above, and such modifications and changes also fall within the scope of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
obtaining, by a second apparatus, first information from a first apparatus, wherein the first information is used for wireless communication scheduling of the first apparatus, the first information comprises at least one of the following information: first request information, service status information of the first apparatus, and configuration information of the industrial communication system, and the first request information is used to request a wireless communication system to adjust scheduling information of the first apparatus; and
sending, by the second apparatus, the first information to a network exposure function network element in the wireless communication system.

2. The method according to claim 1, wherein the method further comprises:
obtaining, by the second apparatus, second information from the network exposure function network element, wherein the second information comprises network status information of the wireless communication network; and
sending, by the second apparatus, the second information to the first apparatus.

3. The method according to claim 2, wherein
the network status information comprises at least one of the following information: wireless network status information of the first apparatus, air interface capacity information of the wireless communication system, and a network connection relationship of the wireless communication system.

4. The method according to any one of claims 1 to 3, wherein
the second apparatus is a function instance established on a first application function network element.

5. The method according to any one of claims 1 to 4, wherein
the first apparatus comprises a programmable logic controller PLC and/or an input/output I/O device.

6. The method according to any one of claims 1 to 5, wherein the method is applied to the industrial communication system, and the industrial communication system comprises the first apparatus and the second apparatus.

7. A communication method, wherein the method comprises:
determining, by a first apparatus, first information, wherein the first information is used for wireless communication scheduling of the first apparatus, the first information comprises at least one of the following information: first request information, service status information of the first apparatus, and configuration information of the industrial communication system, and the first request information is used to request a wireless communication system to adjust scheduling information of the first apparatus; and
sending, by the first apparatus, the first information to a network exposure function network element in the wireless communication system.

8. The method according to claim 7, wherein the sending, by the first apparatus, the first information to a network exposure function network element in the wireless communication system comprises:
sending, by the first apparatus, the first information to the network exposure function network element via a second apparatus, wherein the second apparatus supports communication with the network exposure function network element.

9. The method according to claim 7 or 8, wherein the method further comprises:
obtaining, by the first apparatus, second information from the network exposure function network element, wherein the second information comprises network status information of the wireless communication system; and
controlling, by the first apparatus, a first service based on the second information.

10. The method according to claim 9, wherein the obtaining, by the first apparatus, second information from the network exposure function network element comprises:
obtaining, by the first apparatus, the second information from the network exposure function network element via the second apparatus, wherein the second apparatus supports communication with the network exposure function network element.

11. The method according to claim 9 or 10, wherein
the network status information comprises at least one of the following information: wireless network status information of the first apparatus, air interface capacity information of the wireless communication system, and a network connection relationship of the wireless communication system.

12. The method according to any one of claims 9 to 11, wherein the controlling, by the first apparatus, a first service based on the second information comprises:
performing, by the first apparatus, service degradation on the first service based on the second information when a fault occurs in the industrial communication system and/or a fault occurs in the wireless communication system.

13. The method according to any one of claims 9 to 12, wherein the controlling, by the first apparatus, a first service based on the second information comprises:
determining, by the first apparatus, preset waiting duration based on the second information when the fault occurs in the industrial communication system and/or the fault occurs in the wireless communication network; and
terminating, by the first apparatus, the first service if the fault in the first apparatus and/or the fault in the wireless communication system are/is not rectified within the preset duration.

14. The method according to claim 8 or 10, wherein
the second apparatus is a function instance established on a first application function network element.

15. The method according to any one of claims 7 to 14, wherein
the first apparatus comprises at least one of a programmable logic controller PLC, an input/output I/O device, or an application function AF network element.

16. The method according to any one of claims 7 to 15, wherein the method is applied to the industrial communication system, and the industrial communication system comprises the first apparatus.

17. A communication apparatus, comprising:
a processor, configured to execute a computer program stored in a memory, to enable the apparatus to perform the method according to any one of claims 1 to 6 or the method according to any one of claims 7 to 16.

18. The apparatus according to claim 17, wherein the apparatus further comprises the memory.

19. A computer-readable storage medium, wherein a computer program is stored on the computer-readable storage medium; and when the computer program is run on a computer, the computer is enabled to perform the method according to any one of claims 1 to 6 or the method according to any one of claims 7 to 16.

20. A computer program product, wherein the computer program product comprises instructions used to perform the method according to any one of claims 1 to 6 or instructions used to perform the method according to any one of claims 7 to 16.

21. An industrial communication system, comprising a first apparatus and a second apparatus, wherein
the second apparatus is configured to perform the method according to any one of claims 1 to 6; and
the first apparatus is configured to perform the method according to any one of claims 7 to 16.

22. An industrial communication system, comprising a first apparatus and a second apparatus, wherein
the first apparatus is configured to:
send first information to the second apparatus, wherein the first information is used for wireless communication scheduling of the first apparatus, the first information comprises at least one of the following information: first request information, service status information of the first apparatus, and configuration information of the industrial communication system, and the first request information is used to request a wireless communication system to adjust scheduling information of the first apparatus; and
the second apparatus is configured to:
obtain the first information; and
send the first information to a network exposure function network element in the wireless communication system.

23. A system, comprising a second apparatus and a network exposure function network element, wherein
the second apparatus is configured to:
obtain first information from a first apparatus, wherein the first information is used for wireless communication scheduling of the first apparatus, the first information comprises at least one of the following information: first request information, service status information of the first apparatus, and configuration information of the industrial communication system, and the first request information is used to request a wireless communication system to adjust scheduling information of the first apparatus; and
send the first information to a network exposure function network element in the wireless communication system; and
the network exposure function network element is configured to:
receive the first information.

24. A system, comprising a second apparatus and a network exposure function network element, wherein
the second apparatus is configured to:
determine first information, wherein the first apparatus belongs to an industrial communication system, the first information is used for wireless communication scheduling of the first apparatus, the first information comprises at least one of the following information: first request information, service status information of the first apparatus, and configuration information of the industrial communication system, and the first request information is used to request a wireless communication system to adjust scheduling information of the first apparatus; and
send the first information to a network exposure function network element in the wireless communication system; and
the network exposure function network element is configured to:
receive the first information.

25. A communication method, wherein the method comprises:
sending, by a first apparatus, first information to a second apparatus, wherein the first apparatus and the second apparatus belong to an industrial communication system, the first information is used for wireless communication scheduling of the first apparatus, the first information comprises at least one of the following information: first request information, service status information of the first apparatus, and configuration information of the industrial communication system, and the first request information is used to request a wireless communication system to adjust scheduling information of the first apparatus;
obtaining, by the second apparatus, the first information; and
sending, by the second apparatus, the first information to a network exposure function network element in the wireless communication system.

26. A communication method, wherein the method comprises:
obtaining, by a second apparatus, first information from a first apparatus, wherein the first apparatus and the second apparatus belong to an industrial communication system, the first information is used for wireless communication scheduling of the first apparatus, the first information comprises at least one of the following information: first request information, service status information of the first apparatus, and configuration information of the industrial communication system, and the first request information is used to request a wireless communication system to adjust scheduling information of the first apparatus;
sending, by the second apparatus, the first information to a network exposure function network element in the wireless communication system; and
receiving, by the network exposure function network element, the first information.

27. A communication method, wherein the method comprises:
determining, by a first apparatus, first information, wherein the first apparatus belongs to an industrial communication system, the first information is used for wireless communication scheduling of the first apparatus, the first information comprises at least one of the following information: first request information, service status information of the first apparatus, and configuration information of the industrial communication system, and the first request information is used to request a wireless communication system to adjust scheduling information of the first apparatus;
sending, by the first apparatus, the first information to a network exposure function network element in the wireless communication system; and
receiving, by the network exposure function network element, the first information.
